(19)

Europäisches Patentamt
European Patent Office
Office européen des brevets

(11) **EP 3 812 733 A1**

(12) **EUROPÄISCHE PATENTANMELDUNG**

(43) Veröffentlichungstag:
**28.04.2021 Patentblatt 2021/17**

(21) Anmeldenummer: **19204919.5**

(22) Anmeldetag: **23.10.2019**

(51) Int Cl.:
*G01M 11/02* (2006.01)     *G01N 21/958* (2006.01)
*G02C 7/02* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
**KH MA MD TN**

(71) Anmelder: **Carl Zeiss Vision International GmbH**
**73430 Aalen (DE)**

(72) Erfinder:
- **GLASENAPP, Carsten**
  **73447 Oberkochen (DE)**
- **AMBERG, Martin**
  **73431 Aalen (DE)**
- **SCHÖN, Roland**
  **73433 Aalen (DE)**

(74) Vertreter: **Gauss, Nikolai et al**
**Pfiz/Gauss Patentanwälte PartmbB**
**Tübingerstraße 26**
**70178 Stuttgart (DE)**

(54) **VERFAHREN UND SYSTEM ZUM ANZEICHNEN EINER AUS EINER ORTSABHÄNGIGEN INFORMATION ZU EINEM KÖRPER GEWONNENEN ANZEIGEINFORMATION**

(57)     Die Erfindung betrifft das Anzeichnen einer aus einer ortsabhängigen Information zu einem Körper (16) gewonnenen Anzeigeinformation auf einer Oberfläche (14) des Körpers (16). Erfindungsgemäß wird zu dem Körper (16) für eine Vielzahl von Orten auf oder in dem Körper (16) ermittelte ortsabhängige Information in eine Anzeigeinformation überführt, die wenigstens eine zu einem körperfesten Koordinatensystem (28) des Körpers (16) referenzierte dreidimensionale Lageinformation eines auf dem Körper (16) oder in dem Körper (16) liegenden Orts enthält. Die Anzeigeinformation wird für das Visualisieren auf der Oberfläche (14) des Körpers (16) an einem auf einer Anzeigefläche (22) liegenden, durch eine Projektion des zu der dreidimensionalen Lageinformation gehörenden, auf dem Körper (16) oder in dem Körper (16) liegenden Ort definierten Projektionsort in einem zu dem Koordinatensystem (28) des Körpers (16) referenzierten Koordinatensystem (32) der Anzeigefläche (22) angezeigt. Diese Anzeigeinformation kann dann an dem auf der Oberfläche (14) des Körpers (16) visualisierten und in der Anzeigefläche (22) liegenden Projektionsort z. B. durch Anbringen wenigstens einer Markierung (38, 38') auf oder in dem Körper (16) angezeichnet werden.

Fig.1

**Beschreibung**

Die Erfindung betrifft ein Verfahren und ein System zum Anzeichnen einer aus einer ortsabhängigen Information zu einem Körper gewonnenen Anzeigeinformation auf einer Oberfläche des Körpers.

Ein derartiges Verfahren und ein derartiges System sind aus der DE 10 2016 009 810 A1 bekannt. Dort ist angegeben, dass auf der Oberfläche des Körpers von Brillengläsern Funktionsgravuren und Abmessungen von Abständen unter Verwendung eines Pupillendistanzlineals angezeichnet werden, um eine Zentrierung der Brillengläser zu überprüfen.

Für das Überprüfen und Bestimmen der Zentrierung von Brillengläsern werden auch sogenannte Scheitelbrechwertmessgeräte eingesetzt, die an einem Punkt auf der Oberfläche des Brillenglases dessen optische Wirkung bestimmen, indem zu dem Punkt Messwerte in Form von Sphäre, Zylinder und Achse bestimmt werden. Das Überprüfen und Bestimmen der Zentrierung von Brillengläsern kann allerdings auch in Geräten erfolgen, die, wie in der DE 10 2015 211 879 A1 beschrieben, eine Verteilung der Brechkraft der Brillengläser erfassen.

Aufgabe der Erfindung ist es, auf der Oberfläche eines Körpers Anzeigeinformation für das Anzeigen von Information zu dem Körper zu visualisieren.

Diese Aufgabe wird durch das in Anspruch 1 angegebene Verfahren und das in Anspruch 12 angegebene System gelöst. Vorteilhafte Ausführungsformen der Erfindung sind in den abhängigen Ansprüchen angegeben.

Bei dem in Anspruch 1 angegebenen Verfahren zum Anzeichnen einer aus einer ortsabhängigen Information zu einem Körper gewonnenen Anzeigeinformation auf einer Oberfläche des Körpers wird die für eine Vielzahl von Orten auf oder in dem Körper ermittelte ortsabhängige Information zu dem Körper in eine Anzeigeinformation überführt, die wenigstens eine zu einem körperfesten Koordinatensystem des Körpers referenzierte dreidimensionale Lageinformation eines auf dem Körper oder in dem Körper liegenden Orts enthält. Die Anzeigeinformation für das Visualisieren auf der Oberfläche des Körpers wird dabei an einem auf einer Anzeigefläche liegenden, durch eine Projektion des zu der dreidimensionalen Lageinformation gehörenden, auf dem Körper oder in dem Körper liegenden Orts definierten Projektionsort in einem zu dem Koordinatensystem des Körpers referenzierten Koordinatensystem der Anzeigefläche angezeigt. Die Anzeigeinformation an dem auf der Oberfläche des Körpers visualisierten Projektionsort kann dann durch Anbringen wenigstens einer Markierung auf oder in dem Körper angezeichnet werden.

Das in Anspruch 1 angegebene System zum Anzeichnen einer aus einer ortsabhängigen Information zu einem Körper gewonnenen Anzeigeinformation auf einer Oberfläche des Körpers weist eine Recheneinrichtung auf, die für eine Vielzahl von Orten auf oder in dem Körper ermittelte ortsabhängige Information in eine Anzeigeinformation überführt, die wenigstens eine zu einem körperfesten Koordinatensystem des Körpers referenzierte dreidimensionale Lageinformation eines auf dem Körper oder in dem Körper liegenden Orts enthält. Das System hat eine Anzeigeeinrichtung für das Anzeigen der Anzeigeinformation zum Zwecke des Visualisierens auf der Oberfläche des Körpers an einem auf einer Anzeigefläche liegenden, durch eine Projektion des zu der dreidimensionalen Lageinformation gehörenden, auf dem Körper oder in dem Körper liegenden Orts definierten Projektionsort in einem zu dem Koordinatensystem des Körpers referenzierten Koordinatensystem der Anzeigefläche. Das System kann eine Markierungseinrichtung für das Aufbringen einer Markierung auf oder in dem Körper zum Zwecke des Anzeichnens der Anzeigeinformation an dem auf der Oberfläche des Körpers visualisierten Projektionsort umfassen.

Die Erfindung beruht auf dem Gedanken, dass insbesondere bei Brillengläsern, Brillenglas-Habfabrikaten oder Brillenglas-Rohlingen das Bedürfnis besteht, den Verlauf einer Zylinderachse oder die Lage eines Fernbezugspunkts und eines Nahbezugspunkts auf einer Brillenglas-Oberfläche anzuzeichnen, um damit z. B. den Verlauf der Zylinderachse auf einem in einer Brille angeordneten Brillenglas oder bei der Herstellung von Brillengläsern vor bestimmten Bearbeitungsschritten auf Brillenglas-Rohlingen oder Brillenglas-Halbfabrikaten sichtbar zu machen.

Es ist insbesondere eine Idee der Erfindung, auf der Oberfläche des Körpers eines in einem Strahlengang angeordneten optischen Elements, etwa auf einem Umlenkspiegel, auf einer Mikroskoplinse oder auf einem Filter die Lage von Defekten auf oder in dem Körper des optischen Elements anzuzeigen.

Eine Idee der Erfindung ist es auch, in Montageprozessen oder im Rahmen der Qualitätssicherung auf der Oberfläche des Körpers optischer Elemente oder auch anderer Gegenstände eine von außen unsichtbare Ausrichtung oder Kontur oder Materialverunreinigungen oder Einschlüsse, wie etwa von außen unsichtbare, in dem Körper eines Gegenstands eingeschlossene Gasblasen, aber auch Kratzer an der Oberfläche des Körpers oder Fingerabdrücke auf der Oberfläche des Körpers oder Werte insbesondere physikalischer Größen, wie z. B. Werte der Brechkraft kenntlich zu machen.

Eine Idee der Erfindung ist insbesondere, auf der Oberfläche eines Körpers, der eine Torus-Geometrie oder eine Ellipsoid-Geometrie hat, die Achse des entsprechenden Torus oder des entsprechenden Ellipsoides anzuzeigen. Eine Idee der Erfindung ist es auch, den Verlauf der Achse eines doppelbrechenden Materials zu visualisieren, aus dem ein Körper besteht. Insbesondere ist es eine Idee der Erfindung, auf der Oberfläche eines Körpers das Zentrum einer rotationssymmetrischen Struktur, z. B. das Zentrum einer sogenannten "Off Axis Asphere" zur Anzeige zu bringen.

Zu bemerken ist, dass die Anzeigefläche und die Oberfläche des Körpers grundsätzlich zusammenfallen können.

Bei einer vorteilhaften Ausführungsform der Erfindung ist vorgesehen, dass die Anzeigeinformation ein mittels eines Projektors auf der Oberfläche des Körpers erzeugtes Muster ist. Auf diese Weise lässt sich Anzeigeinformation insbesondere auf der Oberfläche eines intransparenten Körpers anzeigen. Eine Idee der Erfindung ist es auch, für Modifikationen an oder in dem dem Körper den richtigen Punkt des Eingriffes von außen im Vorfeld sicher zu stellen. Dies kann beispielshaft im Operationssaal in medizinischen Anwendungen der Fall sein.

Die Anzeigefläche kann aber auch eine außerhalb des Körpers liegende, auf einer der Oberfläche des Körpers abgewandten Seite des Körpers angeordnete Fläche sein. Zu bemerken ist, dass die Anzeigeinformation auch ein mittels eines Displays in der Anzeigefläche erzeugtes Muster oder ein auf einer Oberfläche eines Schablonenträgers angeordnetes Muster sein kann. Insbesondere ist zu bemerken, dass die ortsaufgelöste Information eine Messgröße aus der Gruppe Brechkraft und/oder physikalische Dichte und/oder optische Dichte und/oder Magnetisierung und/oder Kerndichte und/oder Elektronendichte sein kann.

Die Markierung kann auf die Oberfläche des Körpers aufgedruckt oder mittels eines lithografischen Verfahrens auf der Oberfläche des Körpers aufgebracht werden. Die Markierung kann auch einen inneren Einschluss des Körpers und/oder einen Oberflächendefekt des Körpers anzeigen.

Eine Idee der Erfindung ist es insbesondere, dass der Körper ein Brillenglas, ein Brillenglas-Rohling oder ein Brillenglas-Halbfabrikat ist und die Markierung eine optische Mitte des Brillenglases, des Brillenglas-Rohlings oder des Brillenglas-Halbfabrikats anzeigt und/oder eine Zylinderachse des Brillenglases, des Brillenglas-Rohlings oder des Brillenglas-Halbfabrikats anzeigt und/oder ein Brillenglas-Koordinatensystem anzeigt und/oder einen Nahbezugspunkt und/oder einen Fernbezugspunkt anzeigt.

Im Rahmen der Erfindung kann das Koordinatensystem der Anzeigefläche zu dem Koordinatensystem des Körpers anhand der Projektion wenigstens eines Abschnitts eines Rands der Oberfläche des Körpers auf die Anzeigefläche referenziert werden.

Die Erfindung erstreckt sich auch auf ein Computerprogrammprodukt mit einem Computerprogramm mit Programmcode zur Durchführung aller Verfahrensschritte der vorstehend angegebenen Verfahren, wenn das Computerprogramm in eine Recheneinrichtung geladen und/oder in einer Recheneinrichtung durchgeführt wird.

Ein erfindungsgemäßes System zum Anzeichnen einer aus einer ortsabhängigen Information zu einem Körper gewonnenen Anzeigeinformation enthält bevorzugt wenigstens ein Messgerät für das Ermitteln von ortabhängiger Information zu dem Körper für eine Vielzahl von Punkten auf oder in dem Körper aus der Gruppe Scheitelbrechwert-Messgerät, Deflektometer, OCT-Messgerät, Interferometer, konfokales Mikroskop, Gerät für das Bestimmen der optischen inversen Radon-Transformation, Röntgentomograf, Magnetresonanztomograf, Thermograf, mit IR-Licht arbeitendes Scheitelbrechwert-Messgerät, mit IR-Licht arbeitendes Deflektometer, mit IR-Licht arbeitendes OCT-Messgerät, mit IR-Licht arbeitendes Interferometer, mit IR-Licht arbeitendes konfokales Mikroskop, mit IR-Licht arbeitendes Gerät für das Bestimmen der optischen inversen Radon-Transformation, Ultraschall-Messgerät, Schlierenmessverfahren-Messgerät, das der Recheneinrichtung die zu dem Körper für eine Vielzahl von Punkten auf oder in dem Körper ermittelte ortsabhängige Information zuführt. Ein erfindungsgemäßes System kann insbesondere für das Anzeichnen einer aus einer ortsabhängigen Information zu einem ersten Brillenglas und zu einem zweiten Brillenglas ausgelegt sein, die in ein Brillengestell eingefasste Körper in einer Brille bilden.

Im Folgenden wird die Erfindung anhand der in der Zeichnung in schematischer Weise dargestellten Ausführungsbeispiele näher erläutert.

Es zeigen:

Fig. 1      eine Seitenansicht eines ersten Systems für das Anzeichnen einer aus einer ortsabhängigen Information zu einem als ein Brillenglas ausgebildeten Körper gewonnenen Anzeigeinformation auf einer Oberfläche;

Fig. 2      das System der Fig. 1 in einer Draufsicht;

Fig. 3      eine ortsaufgelöste Brechkraftverteilung zu dem Brillenglases;

Fig. 4      das Korrigieren einer Lage der Bildanzeige einer Anzeigeeinrichtung in dem System;

Fig. 5      das Brillenglas mit einer darauf angebrachten Markierung;

Fig. 6      ein zweites System für das Anzeichnen einer aus einer ortsabhängigen Information zu einem transparenten als ein Brillenglas ausgebildeten Körper auf einer Oberfläche;

Fig. 7      das System der Fig. 6 in einer Draufsicht;

Fig. 8      eine Messeinrichtung für das Erfassen von Defekten in dem Körper des Brillenglases;

Fig. 9      ein drittes System für das Anzeichnen einer aus einer ortsabhängigen Information zu einem transparenten als ein Brillenglas ausgebildeten Körper auf einer Oberfläche;

Fig. 10      den Körper des Brillenglases mit einer Markierung an dessen Rand;

Fig. 11     das System der Fig. 9 in einer Draufsicht;

Fig. 12a     ein weiteres System für das Anzeichnen einer aus einer ortsabhängigen Information zu einem intransparenten Körper auf einer Oberfläche in einem ersten Betriebszustand; und

Fig. 12b     das weitere System für das Anzeichnen einer aus einer ortsabhängigen Information zu einem intransparenten Körper auf einer Oberfläche in einem von dem ersten Betriebszustand verschiedenen zweiten Betriebszustand.

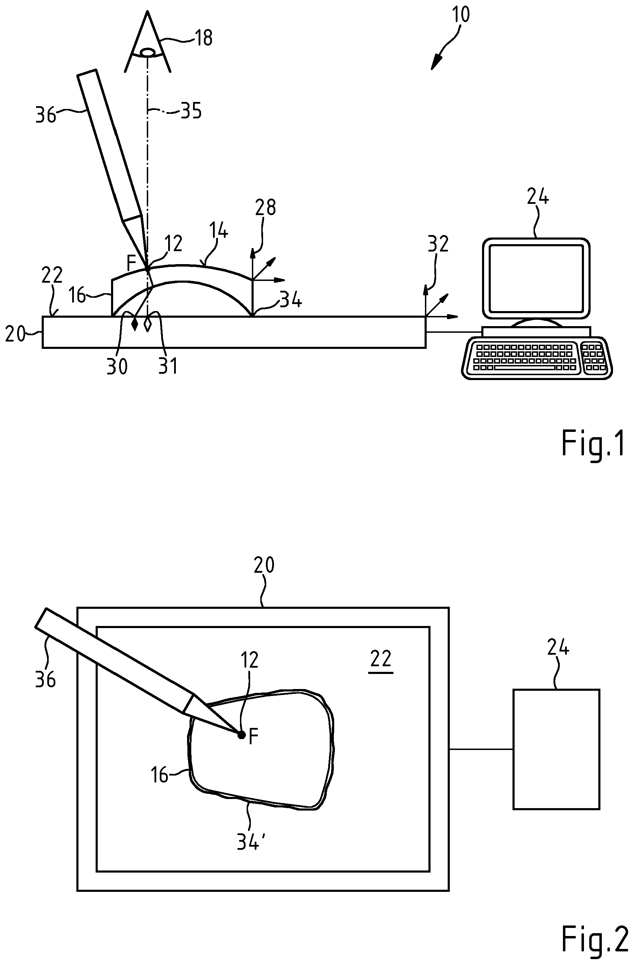

Das in der Fig. 1 gezeigte erste System 10 dient für das Anzeichnen der Lage des Fernbezugspunkts 12 als eine Anzeigeinformation auf der Oberfläche 14 des Körpers 16 eines als ein Gleitsichtglas ausgebildeten Brillenglases durch eine Bedienperson mit einem Betrachterauge 18. Das System 10 enthält eine Anzeigeeinrichtung 20 in Form eines Displays mit einer Anzeigefläche 22. Indem das Brillenglas auf die Anzeigefläche 22 des Displays gelegt wird, kann durch das Brillenglas hindurch auf der Oberfläche 14 des Körpers 16 des Brillenglases Anzeigeinformation visualisiert werden. Die Fig. 1 ist eine Seitenansicht des Systems 10. Die Fig. 2 zeigt das System 10 in einer Draufsicht.

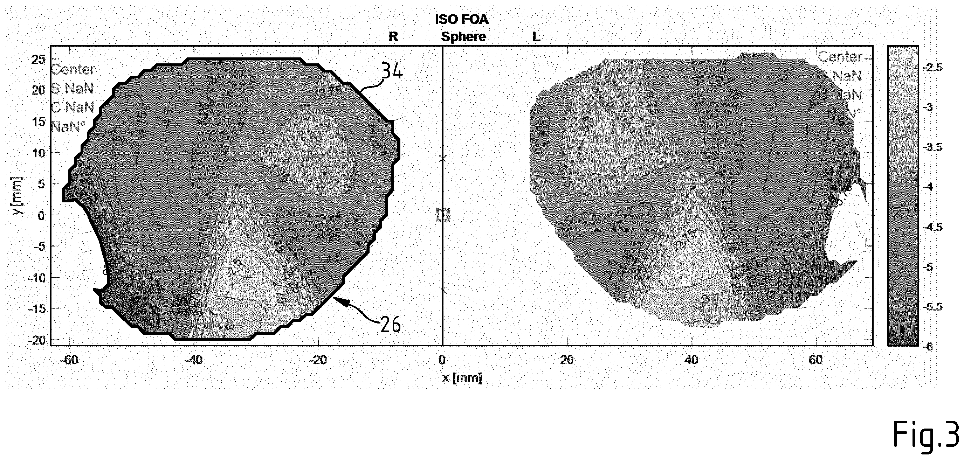

In dem System 10 gibt es eine Recheneinrichtung 24, die eine in der Fig. 3 gezeigte, zu dem Brillenglas ortsaufgelöst ermittelte Brechkraftverteilung 26 in eine Information über die Lage des Fernbezugspunkts 12 auf der Oberfläche 14 des Körpers 16 des Brillenglases als eine dreidimensionale Lageinformation eines auf dem Körper 16 liegenden Orts überführt.

Die mittels der Recheneinrichtung 24 ermittelte Information über die Lage des Fernbezugspunkts 12 auf der Oberfläche 14 des Körpers 16 des Brillenglases ist dabei zu einem körperfesten Koordinatensystem 28 des Körpers 16 des Brillenglases referenziert, das vorliegend durch die Geometrie des Rands 34 des Brillenglases definiert ist. Aufgrund der Referenzierung der Information der Lage des Fernbezugspunkts 12 auf der Oberfläche 14 des Körpers 16 des Brillenglases zu dessen körperfestem Koordinatensystem 28 umfasst die Information über die Lage des Fernbezugspunkts 12 auf der Oberfläche 14 des Körpers 16 des Brillenglases die Koordinaten $x_F$, $y_F$, $z_F$ des Orts des Fernbezugspunkts 12 des Brillenglases in dem zu dem Körper 16 des Brillenglases körperfesten Koordinatensystem 28.

Die Anzeigeeinrichtung 20 ist mit der Recheneinrichtung 24 verbunden. Die Anzeigeeinrichtung 20 erhält von der Recheneinrichtung 24 Informationsdaten, die auf der Anzeigefläche 22 des Displays eine Bildanzeige 30 in Form eines Urbilds einer Projektion des zu der dreidimensionalen Lageinformation gehörenden, auf dem Körper 16 liegenden Orts des Fernbezugspunkts 12. Der Ort des Fernbezugspunkts 12 des Brillenglases ist damit ein auf der Oberfläche 14 des Körpers 16 liegender Projektionsort der auf der Anzeigefläche 22 des Displays zur Anzeige gebrachten Bildanzeige 30, die aufgrund der das Licht brechenden Wirkung des Körpers 16 des Brillenglases von dem Durchstoßpunkt 31 der Blickrichtung 35 in der Anzeigefläche 22 des Displays abliegt.

Damit die Anzeigeeinrichtung 20 die Bildanzeige 30 als ein Urbild anzeigen kann, das der Projektion des auf dem Körper 16 liegenden Orts des Fernbezugspunkts entspricht, zu dem die dreidimensionale Lageinformation gehört, ist die Anzeige des Displays der Anzeigeeinrichtung 20 in einem Koordinatensystem 32 definiert, das zu dem Koordinatensystem 28 des Körpers 16 referenziert ist.

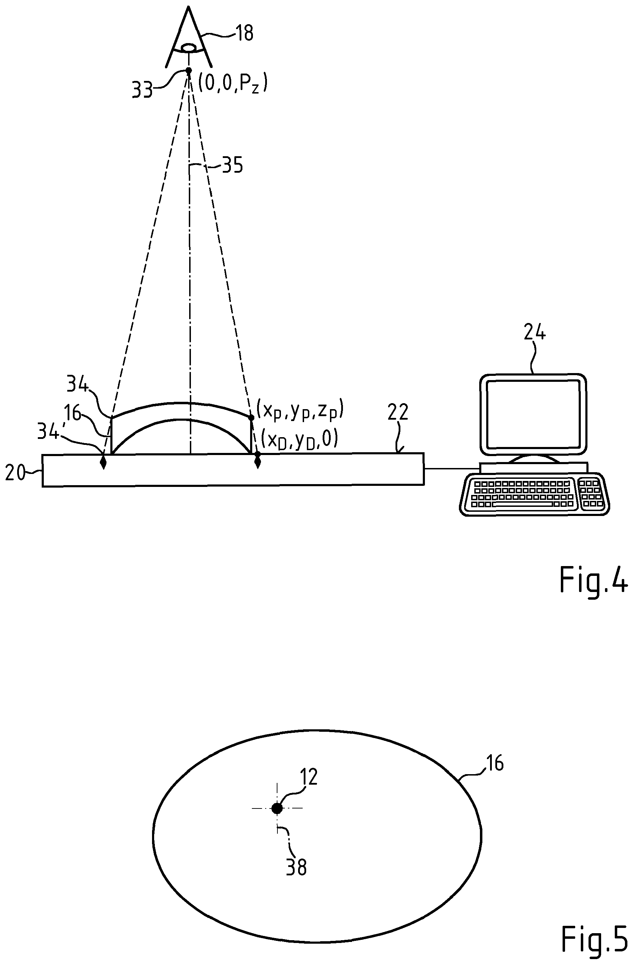

Die Fig. 4 erläutert das Referenzieren des Koordinatensystems 28 des Körpers 16 des Brillenglases zu dem Koordinatensystem 32 der Anzeige des Displays der Anzeigeeinrichtung 20 in dem System 10.

Einer Person mit dem Betrachterauge 18 wird mittels des Displays der Anzeigeeinrichtung 20 der ein körperfestes Koordinatensystem 28 des Körpers 16 des Brillenglases definierende Rand 34 des Körpers 16 des Brillenglases beim Blick aus einem Betrachtungszentrum 33 heraus auf das Display der Anzeigeeinrichtung 20 mit der Blickrichtung 35 im Maßstab 1:1 angezeigt.

Die Recheneinrichtung 24 berechnet hierzu aus einer ortsabhängigen Information zu dem Körper 16 des Brillenglases mit geometrischen Daten den Verlauf 34' der Zentralprojektion von dessen Rand 34, der mittels der Koordinaten ($x_p, y_p, z_p$) repräsentiert ist, aus dem Betrachtungszentrum 33 heraus, das die Koordinaten (0,0, $P_z$) hat, in die Ebene der Anzeigefläche 22 des Displays der Anzeigeeinrichtung 20.

Die Koordinaten ($x_D$, $y_D$, 0) des Verlaufs der Zentralprojektion genügen dabei folgender Beziehung:

$$x_D = \frac{x_p}{1 - \frac{f(x_p, y_p)}{P_z}},$$

$$y_D = \frac{y_p}{1 - \frac{f(x_p, y_p)}{P_z}},$$

wobei f($x_p$, $y_p$) den Verlauf des Rands 34 des Körpers 16 des Brillenglases in einer Randebene beschreibt, die von der Ebene der Anzeigefläche 22 des Displays den Abstand $z_p$ hat.

Anhand des durch das Display der Anzeigeeinrichtung 20 angezeigten Verlaufs 34' des Rands 34 des Brillenglases kann die Person dann den Körper 16 des Brillenglases zu der der Anzeigeeinrichtung 20 durch Verlagern in der Ebene von deren Display ausrichten, um auf diese Weise den Körper 16 des Brillenglases mit dem körperfesten Koordinatensystem 28 zu dem Koordinatensystem 32 des Displays der Anzeigeeinrichtung 20 und damit zu der Anzeigefläche 22 zu referenzieren.

Die Recheneinrichtung 24 berechnet aus einer bekannten Geometrie des Körpers 16 des Brillenglases sowie dessen Brechungsindex und bekannter ortsabhängiger Information zu dem Körper 16 auf der Grundlage der optischen Abbildungsgesetze, insbesondere anhand des Snell'schen Brechungsgesetzes Anzeigeinformation für das Visualisieren auf der Oberfläche 14 des Körpers 16 an einem auf der Anzeigefläche 22 der Anzeigeeinrichtung 20 liegenden, durch eine Projektion des zu der dreidimensionalen Lageinformation gehörenden, auf dem Körper 16 oder in dem Körper 16 liegenden Orts definierten Projektionsort in dem zu dem Koordinatensystem 28 des Körpers 16 referenzierten Koordinatensystem 32 der Anzeigefläche 22.

Zu bemerken ist, dass die Geometrie des Körpers 16 des Brillenglases z. B. in einer vorzugsweise mit der Recheneinrichtung 24 verbundenen Messeinrichtung ermittelt werden kann, die das Bestimmen der Form des Körpers 16 des Brillenglases ermöglicht. Die Geometrie des Körpers 16 des Brillenglases kann allerdings z. B. auch aus Produktionsdaten bekannt sein.

Die Bildanzeige 30 der Anzeigeeinrichtung 20 ist, wie die Fig. 1 zeigt, für das Ausgleichen der Brechung der von der Bildanzeige 30 in das Betrachterauge 18 geführten, den Körper 16 des Brillenglases durchsetzenden Lichtstrahlen korrigiert.

Das in der Fig. 1 und in der Fig. 2 gezeigte System 10 weist eine Markierungseinrichtung 36 auf. In dem System 10 ist die Markierungseirichtung 36 als ein Markierungsstift ausgebildet, mittels dessen eine Person an dem Ort des Fernbezugspunkts 12 auf der Oberfläche 14 des Körpers 16 eine Markierung aufbringen kann. Die Fig. 5 zeigt das Brillenglas mit einer auf der Oberfläche 14 von dessen Körper 16 an dem Ort des Fernbezugspunkts 12 liegenden, mittels der Markierungseinrichtung aufgebrachten Markierung 38 als eine Anzeigeinformation.

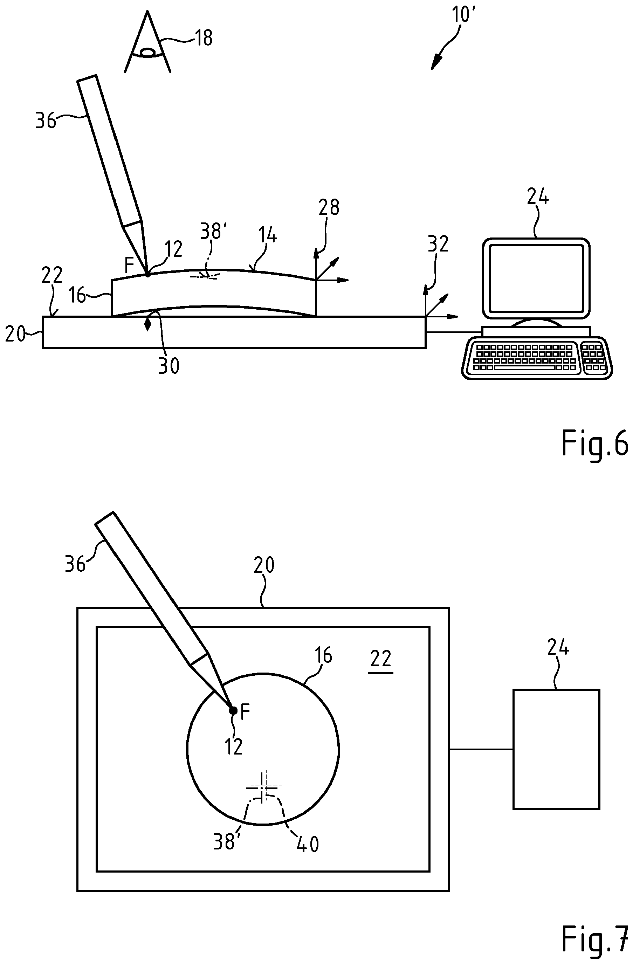

Das in der Fig. 6 gezeigte zweite System 10' dient für das Anzeichnen der Lage des Fernbezugspunkts 12 als eine Anzeigeinformation auf der Oberfläche 14 des Körpers 16 eines Brillenglas-Halbfabrikats für ein Gleitsichtglas. Anders als der Körper 16 des in der Fig. 1 gezeigten Brillenglases hat der Körper 16 des Brillenglas-Halbfabrikats in der Fig. 6 einen rotationssymmetrischen Rand 34.

Soweit die Baugruppen und Elemente des Systems 10' den Baugruppen und Elementen des vorstehend anhand der Fig. 1 bis Fig. 5 beschriebenen Systems 10 entsprechen, sind diese durch die gleichen Zahlen als Bezugszeichen kenntlich gemacht.

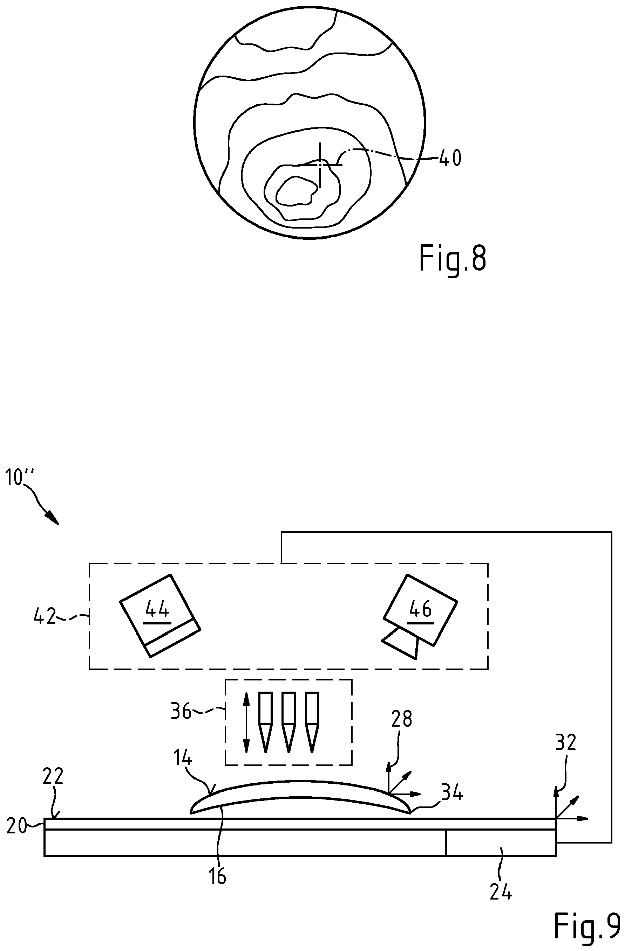

Auch das zweite System 10' enthält eine Anzeigeeinrichtung 20 in Form eines Displays mit einer Anzeigefläche 22. Die Fig. 7 zeigt das zweite System 10' in einer Draufsicht. Die Recheneinrichtung 24 in dem System 10' erhält als eine ortaufgelöste Information zu dem Körper 16 die in der Fig. 8 gezeigte Brechkraftverteilung und das Bild 40 einer auf der Oberfläche 14 des Körpers 16 angebrachten Markierung 38'. Die auf der Oberfläche 14 des Körpers 16 des Brillenglas-Halbfabrikats angebrachte Markierung 38' definiert dabei durch ihre geometrische Form ein zu dem Körper 16 des Brillenglas-Halbfabrikats ortsfestes Koordinatensystem.

Die Recheneinrichtung 24 überführt die in der Fig. 8 gezeigte, zu dem Brillenglas ortsaufgelöst ermittelte Brechkraftverteilung 26 in eine Information über die Lage des Fernbezugspunkts 12 als eine Anzeigeinformation auf der Oberfläche 14 des Körpers 16 des Brillenglas-Halbfabrikats als eine dreidimensionale Lageinformation eines auf dem Körper 16 liegenden Orts.

Die mittels der Recheneinrichtung 24 ermittelte Information über die Lage des Fernbezugspunkts 12 auf der Oberfläche 14 des Körpers 16 des Brillenglases ist dabei auch hier zu einem körperfesten Koordinatensystem 28 des Körpers 16 des Brillenglases referenziert. D. h., die Information über die Lage des Fernbezugspunkts 12 auf der Oberfläche 14 des Körpers 16 des Brillenglases umfasst die Koordinaten $x_F$, $y_F$, $z_F$ des Orts des Fernbezugspunkts 12 auf der Oberfläche 14 des Körpers 16 des Brillenglases in einem zu dem Körper 16 des Brillenglases körperfesten Koordinatensystem 28.

Die Anzeigeeinrichtung 20 ist mit der Recheneinrichtung 24 verbunden. Die Anzeigeeinrichtung 20 erhält von der Recheneinrichtung 24 Informationsdaten, die auf der Anzeigefläche 22 des Displays eine Bildanzeige 30 in Form eines Urbilds einer Projektion des zu der dreidimensionalen Lageinformation gehörenden, auf dem Körper 16 liegenden Orts des Fernbezugspunkts 12 angezeigt werden. Der Ort des Fernbezugspunkts 12 des Brillenglases ist damit ein auf der Oberfläche 14 des Körpers 16 liegender Projektionsort für Anzeigeinformation, die einer Bildanzeige 30 entspricht, die auf der Anzeigefläche 22 des Displays zur Anzeige gebracht wird.

Damit die Anzeigeeinrichtung 20 die Bildanzeige 30 als ein der Projektion des zu der dreidimensionalen Lageinformation gehörenden, auf dem Körper 16 liegenden Orts des Fernbezugspunkts 12 entsprechendes Urbild anzeigen kann, ist die Anzeige des Displays der Anzeigeeinrichtung 20 in einem Koordinatensystem 32 definiert, das zu dem Koordinatensystem 28 des Körpers 16 referenziert ist. Vorliegend wird das Koordinatensystems 28 des Körpers 16 des Brillenglases zu dem Koordinatensystem 32 der Anzeige des Displays der Anzeigeeinrichtung 20 referenziert, indem das Bild 40 der auf der Oberfläche 14 des Körpers 16 des Brillenglas-Halbfabrikats angebrachte Markierung 38' auf der Anzeigefläche 22 des Displays der Anzeigeeinrichtung 20 im Maßstab 1:1 angezeigt wird. Die Person mit dem Betrachterauge 18 kann so anhand der Anzeige des Bilds 40 der Markierung 38' den Körper 16 des Brillenglas-Halbfabrikats zu der Anzeigeeinrichtung 20 ausrichten, wodurch das Koordinatensystem 28 des Körpers 16 zu dem Koordinatensystem 32 der Anzeigeeinrichtung 20 referenziert wird. Indem das Brillenglas auf die Anzeigefläche 22 des Displays gelegt wird, kann dann durch das Brillenglas hindurch so Anzeigeinformation auf der Oberfläche 14 des Körpers 16 des Brillenglases visualisiert werden.

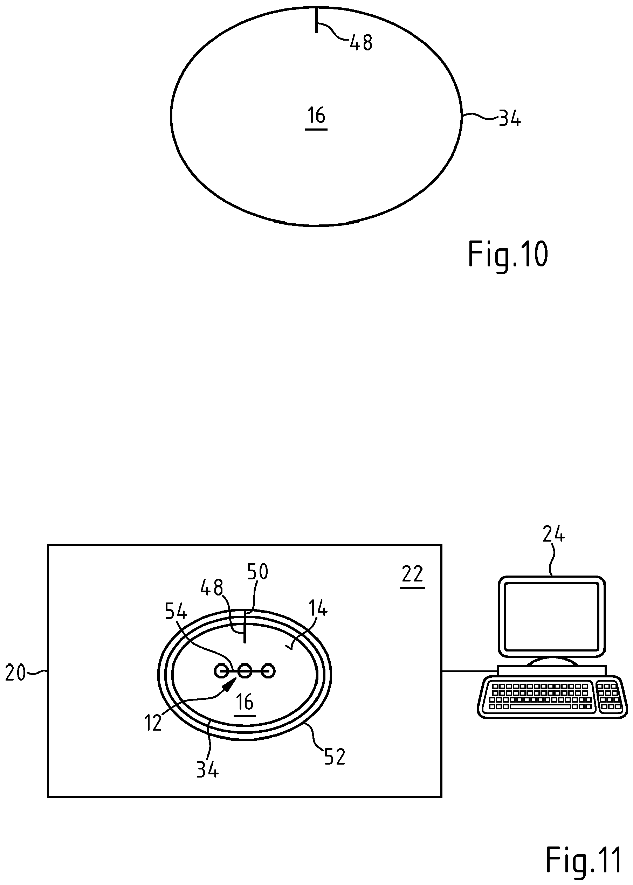

Das in der Fig. 9 gezeigte dritte System 10'' dient für das Anzeichnen der Lage einer Glashorizontale sowie des in Kapitel 5.24 der Norm EN ISO 13 666: 1998 definierten Anpasspunkts und des in dem Kapitel 14.2.12 der Norm EN ISO 13 666: 1998 definierten Prismenbezugspunkts auf der Oberfläche 14 des Körpers 16 eines Brillenglases. In der Fig. 10 ist der Körper 16 des Brillenglases mit einer Markierung 48 an dessen Rand 34 zu sehen.

Soweit die Baugruppen und Elemente des Systems 10'' den Baugruppen und Elementen des vorstehend anhand der Fig. 1 bis Fig. 5 beschriebenen Systems 10 entsprechen, sind diese durch die gleichen Zahlen als Bezugszeichenkenntlich gemacht.

Das System 10'' enthält eine Messeinrichtung 42 mit einem Messgerät, das als ein Scheitelbrechwert-Messgerät 44 ausgebildet ist. Das Scheitelbrechwert-Messgerät 44 dient für das Vermessen einer Sphäre, eines Zylinders und einer Zylinderachse des Brillenglases und stellt hierzu erfasste Messdaten als ortsabhängige Information zu dem Körper 16 für eine Vielzahl von Orten auf oder in dem Körper 16 ermittelte Information bereit. Die Messeinrichtung 42 in dem System 10'' enthält eine Kamera 46, die für das Erfassen eines Bilds des in der Fig. 10 gezeigten Rands 34 des Körpers 16 des Brillenglases als dessen Außenkontur und einer auf der Oberfläche 14 des Körpers 16 des Brillenglases im Bereich des Rands 34 angebrachten Markierung 48 ausgelegt ist und die in der Messeinrichtung 42 in einer bekannten Relativposition zu dem Scheitelbrechwert-Messgerät 44 angeordnet ist. In dem System 10'' gibt es eine Markierungseinrichtung 36 mit drei Markierungsstiften.

Die Fig. 11 zeigt einen Abschnitt des dritten Systems 10'' der Fig. 9 in einer Draufsicht. Das System 10'' weist eine mit der Messeinrichtung 42 verbundene Recheneinrichtung 24 auf und hat eine Anzeigeeinrichtung 20 mit einem Display, mittels dessen eine Ausrichtungsmarkierung 50 und eine Randmarkierung 52 in der Anzeigefläche 22 visualisiert werden kann. Die Recheneinrichtung 24 berechnet aus der für eine Vielzahl von Orten auf oder in dem Körper 16 ermittelten Information zu dem Körper 16 das Anzeigen des Verlaufs der Zylinderachse in Form einer Linie 54 auf dem Display der Anzeigeeinrichtung 20 in einem zu dem Körper 16 des Brillenglases referenzierten Koordinatensystem 28, das zu dem körperfesten Koordinatensystem 32 der Anzeigeeinrichtung 20 mit der Anzeigefläche 22 referenziert ist. Hierfür wird in der Recheneinrichtung 24 mittels eines Computerprogramms das Bild des Rands 34 des Körpers 16 des Brillenglases mit der im Bereich des Rands 34 angebrachten Markierung 48 unter Berücksichtigung der bekannten Relativposition der Kamera 46 in der Messeinrichtung 42 ausgewertet. Diese Bildauswertung erfolgt mit dem Ziel, das zu dem Körper 16 des Brillenglases körperfeste Koordinatensystem 28 und die Zylinderachse des Brillenglases in diesem Koordinatensystem anzugeben und Visualisierungsdaten für das Anzeigen des Verlaufs der Zylinderachse als eine Linie 54 in der Anzeigefläche 22 des Displays zu berechnen.

Das Anzeigen des Verlaufs der Zylinderachse als eine Linie 54 in der Anzeigefläche 22 des Displays ermöglicht dann einer Bedienperson mittels der Markierungseinrichtung 36 durch Absenken der drei Markierungsstifte die Zylinderachse des Zylinders des Brillenglases auf der Oberfläche 14 von dessen Körper 16 anzuzeichnen und damit auf der Oberfläche des Körpers 16 des Brillenglases eine Anzeigeinformation anzubringen.

Zu bemerken ist, dass bei einer modifizierten Ausführungsform des Systems 10'' vorgesehen sein kann, in der Messeinrichtung 42 ein erstes, z. B. linkes und ein zweites, z. B. rechtes Brillenglas gleichzeitig zu vermessen und den Verlauf der Zylinderachse eines Zylinders des linken und rechten Brillenglases in der Anzeigefläche 22 des Displays zu visualisieren. Damit kann das gleichzeitige Anzeichnen des Verlaufs einer Zylinderachse auf der Oberfläche 14 des Körpers 16 eines linken und eines rechten Brillenglases ermöglicht werden.

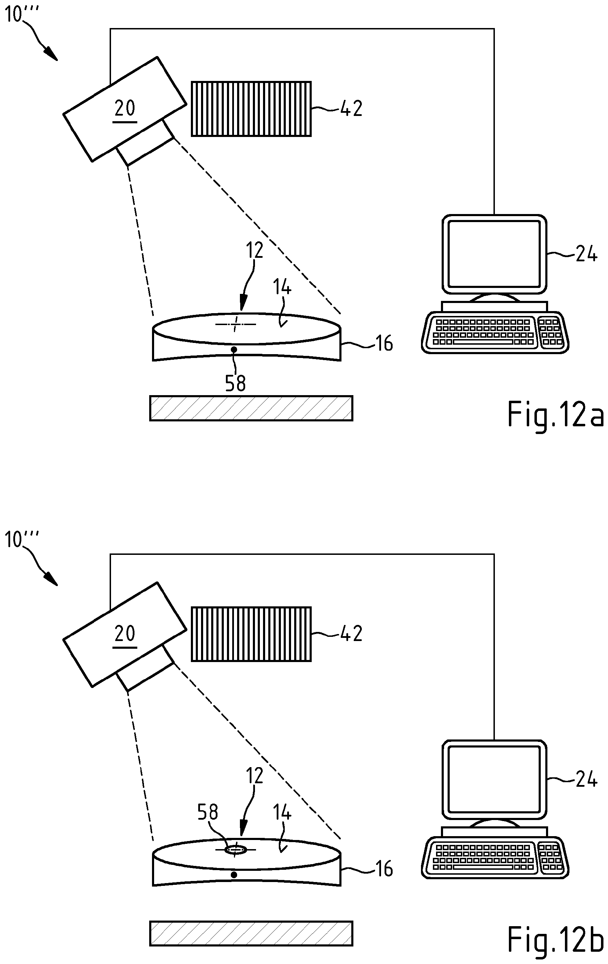

Die Fig. 12a zeigt ein weiteres System 10''' für das Anzeichnen einer aus einer ortsabhängigen Information zu einem intransparenten Körper 16, z. B. dem Körper eines metallischen Werkstücks oder eines oder eines Werkstücks aus einem Keramikmaterial auf einer Oberfläche 14 in einem erste Betriebszustand. Soweit die Baugruppen und Elemente des Systems 10''' den Baugruppen und Elementen des vorstehend anhand der Fig. 1 bis Fig. 5 beschriebenen Systems 10 entsprechen, sind diese durch die gleichen Zahlen als Bezugszeichen kenntlich gemacht.

Das System 10''' enthält eine als ein Röntgentomograph ausgebildete Messvorrichtung 42, die für das ortaufgelöste Erfassen von Verunreinigungen 56 und/oder Einschlüssen in Form einer Gasblase in dem Material des Körpers 16 dient.

In dem System 10''' gibt es eine als ein Projektor ausgebildete Anzeigeeinrichtung 20, die zu der Messvorrichtung 42 in einer bekannten Relativposition angeordnet ist und die auf der Oberfläche 14 des Körpers 16 als eine Anzeigefläche 22 Lichtmuster 58 erzeugen kann, die eine Lage einer Verunreinigung 56 und/oder eines Einschlusses in Form einer Gasblase in dem Material des Körpers 16 visualisieren.

In dem System 10''' gibt es eine Recheneinrichtung 24, die eine mittels der Messeinrichtung 42 erfasste Lage einer Verunreinigungen 56 und/oder eines Einschlusses in dem Körper 16 als eine für eine Vielzahl von Punkten in dem Körper 16 ermittelte ortsabhängige Information in eine Anzeigeinformation überführt, die durch eine Projektion des zu der dreidimensionalen Lageinformation gehörenden, in dem Körper 16 liegenden Ort der Verunreinigung 56 und/oder des Einschlusses in Form einer Gasblase auf die Oberfläche 14 des Körpers 16 gebildet ist. Die Recheneinrichtung 24 ist mit der Anzeigeeinrichtung 20 verbunden und stellt für diese Ansteuerdaten bereit, die ein auf die Oberfläche 14 des Körpers 16 projiziertes Projektionsbild in Form eines Lichtmusters bewirken, das den auf die Oberfläche 14 projizierten Ort einer Verunreinigung 56 oder eines Einschlusses auf der Oberfläche 14 des Körpers 16 anzeigt.

In der Fig. 12b ist das System 10''' für das Anzeichnen einer aus einer ortsabhängigen Information zu einem intransparenten Körper 16 auf einer Oberfläche 14 in einem Betriebszustand zu sehen, in dem die Lage einer auf die Oberfläche 14 projizierten Orts einer Verunreinigung 56 oder eines Einschlusses auf der Oberfläche 14 des Körpers 16 mittels eines von der Anzeigeeinrichtung 20 erzeugten Lichtmusters 58 als eine Anzeigeinformation angezeigt wird.

Die Berechnung dieses Projektionsbildes erfolgt in der Recheneinrichtung 24 unter Berücksichtigung der räumlichen Lage der Anzeigeeinrichtung 20 relativ zu dem Körper 16 und relativ zu der Messvorrichtung 42.

Mittels der als ein Markierungsstift ausgebildeten Markierungseinrichtung 36 kann eine Bedienperson in dem System 10''' den mittels des Lichtmusters 58 auf der Oberfläche 14 des Körpers 16 kenntlich gemachten Ort anzeichnen.

Zu bemerken ist, dass bei einer modifizierten Ausführungsform des Systems 10''' vorgesehen sein kann, die Lage einer auf die Oberfläche 14 projizierten Orts einer Verunreinigung 56 oder eines Einschlusses auf der Oberfläche 14 des Körpers 16 durch Aufdrucken anzuzeigen. Alternativ hierzu ist es auch möglich, auf der Oberfläche 14 des Körpers 16 eine fotoempfindliche Schicht aufzubringen und mittels eines fotolithographischen Prozesses für das Anzeigen der Lage eines auf die Oberfläche 14 projizierten Orts einer Verunreinigung 56 oder eines Einschlusses auf der Oberfläche 14 die fotolithographische Schicht lokal chemisch zu verändern.

Zu bemerken ist darüber hinaus, dass als eine Messvorrichtung für das Ermitteln von ortabhängiger Information zu einem Körper 16 in den vorstehend beschriebenen Systemen auch ein Scheitelbrechwert-Messgerät, ein Deflektometer, ein Interferometer, ein konfokales Mikroskop, ein Gerät für das Bestimmen der optischen inversen Radon-Transformation, ein Röntgentomograf, ein Magnetresonanztomograf, ein Thermograf, ein mit IR-Licht arbeitendes Scheitelbrechwert-Messgerät, ein mit IR-Licht arbeitendes Deflektometer, ein mit IR-Licht arbeitendes OCT-Messgerät, ein mit IR-Licht arbeitendes Interferometer, ein mit IR-Licht arbeitendes konfokales Mikroskop, ein mit IR-Licht arbeitendes Gerät für das Bestimmen der optischen inversen Radon-Transformation, ein Ultraschall-Messgerät, ein Schlierenmessverfahren-Messgerät oder ein vergleichbares Gerät eingesetzt werden kann, das der Recheneinrichtung 24 in einem System die zu dem Körper 16 für eine Vielzahl von Punkten auf oder in dem Körper 16 ermittelte ortsabhängige Information zuführt.

Zusammenfassend sind insbesondere folgende bevorzugte Merkmale der Erfindung festzuhalten: Für das Anzeichnen einer aus einer ortsabhängigen Information zu einem Körper 16 gewonnenen Anzeigeinformation auf einer Oberfläche 14 des Körpers 16 wird zu dem Körper 16 für eine Vielzahl von Orten auf oder in dem Körper 16 ermittelte ortsabhängige Information in eine Anzeigeinformation überführt wird, die wenigstens eine zu einem körperfesten Koordinatensystem 28 des Körpers 16 referenzierte dreidimensionale Lageinformation eines auf dem Körper 16 oder in dem Körper 16 liegenden Orts enthält. Die Anzeigeinformation wird für das Visualisieren auf der Oberfläche 14 des Körpers 16 an einem auf einer Anzeigefläche 22 liegenden, durch eine Projektion des zu der dreidimensionalen Lageinformation gehörenden, auf dem Körper 16 oder in dem Körper 16 liegenden Ort definierten Projektionsort in einem zu dem Koordinatensystem 28 des Körpers 16 referenzierten Koordinatensystem 32 der Anzeigefläche 22 angezeigt. Diese Anzeigeinformation wird dann an dem auf der Oberfläche 14 des Körpers 16 liegenden Projektionsort angezeichnet.

**Bezugszeichenliste**

| | |
|---|---|
| 10 | erstes System |
| 10' | zweites System |
| 10" | drittes System |
| 10''' | viertes System |
| 12 | Fernbezugspunkt |
| 14 | Oberfläche |
| 16 | Körper |
| 18 | Betrachterauge |
| 20 | Anzeigeeinrichtung |
| 22 | Anzeigefläche |
| 24 | Recheneinrichtung |
| 26 | Brechtkraftverteilung |
| 28 | Koordinatensystem des Körpers 16 |
| 30 | Bildanzeige |
| 31 | Durchstoßpunkt |
| 32 | Koordinatensystem der Anzeigeeinrichtung 20 |
| 33 | Betrachtungszentrum |
| 34 | Rand |
| 34' | Verlauf |
| 35 | Blickrichtung |
| 36 | Markierungseinrichtung |
| 38, 38' | Markierung |
| 40 | Bild |
| 42 | Messvorrichtung |
| 44 | Scheitelbrechwert-Messgerät |
| 46 | Kamera |
| 48 | Markierung |
| 50 | Ausrichtungsmarkierung |
| 52 | Randmarkierung |
| 54 | Linie |
| 56 | Verunreinigung |

58      Lichtmuster

**Patentansprüche**

1. Verfahren zum Anzeichnen einer aus einer ortsabhängigen Information zu einem Körper (16) gewonnenen Anzeigeinformation auf einer Oberfläche (14) des Körpers (16),
**dadurch gekennzeichnet, dass**
die ortsabhängige Information zu dem Körper (16) für eine Vielzahl von Orten auf oder in dem Körper (16) ermittelt ist und die für die Vielzahl von Orten auf oder in dem Körper (16) ermittelte Information in eine Anzeigeinformation überführt wird, die wenigstens eine zu einem körperfesten Koordinatensystem (28) des Körpers (16) referenzierte dreidimensionale Lageinformation eines auf dem Körper (16) oder in dem Körper (16) liegenden Orts enthält; und
die Anzeigeinformation für das Visualisieren auf der Oberfläche (14) des Körpers (16) an einem auf einer Anzeigefläche (22) liegenden, durch eine Projektion des zu der dreidimensionalen Lageinformation gehörenden, auf dem Körper (16) oder in dem Körper (16) liegenden Orts definierten Projektionsort in einem zu dem Koordinatensystem (28) des Körpers (16) referenzierten Koordinatensystem (32) der Anzeigefläche (22) angezeigt wird.

2. Verfahren nach Anspruch 1, **dadurch gekennzeichnet, dass** die Anzeigefläche (22) und die Oberfläche (14) des Körpers (16) zusammenfallen.

3. Verfahren nach Anspruch 2, **dadurch gekennzeichnet, dass** die Anzeigeinformation ein mittels eines Projektors auf der Oberfläche (14) des Körpers (16) erzeugtes Muster ist.

4. Verfahren nach Anspruch 1, **dadurch gekennzeichnet, dass** die Anzeigefläche (22) eine außerhalb des Körpers (16) liegende, auf einer der Oberfläche (14) des Körpers (16) abgewandten Seite des Körpers (16) angeordnete Fläche ist.

5. Verfahren nach Anspruch 1, **dadurch gekennzeichnet, dass** die Anzeigeinformation ein mittels eines Displays in der Anzeigefläche (22) erzeugtes Muster ist oder ein auf einer Oberfläche eines Schablonenträgers angeordnetes Muster ist.

6. Verfahren nach einem der Ansprüche 1 bis 5, **dadurch gekennzeichnet, dass** die ortsaufgelöste Information eine Messgröße aus der Gruppe Brechkraft und/oder physikalische Dichte und/oder optische Dichte und/oder Magnetisierung und/oder Kerndichte und/oder Elektronendichte ist.

7. Verfahren nach einem der Ansprüche 1 bis 6, **da-**

**durch gekennzeichnet, dass** die Anzeigeinformation durch Anbringen wenigstens einer Markierung (38, 38') auf oder in dem Körper (16) angezeichnet wird.

8. Verfahren nach Anspruch 7, **dadurch gekennzeichnet, dass** die wenigstens eine Markierung (38, 38') auf die Oberfläche (14) des Körpers (16) aufgedruckt wird oder mittels eines lithografischen Verfahrens auf der Oberfläche (14) des Körpers (16) aufgebracht wird.

9. Verfahren nach Anspruch 7 oder 8, **dadurch gekennzeichnet, dass** die wenigstens eine Markierung (38, 38') einen inneren Einschluss des Körpers (16) und/oder einen Oberflächendefekt des Körpers (16) anzeigt und/oder dass der Körper (16) ein Brillenglas, ein Brillenglas-Rohling oder ein Brillenglas-Halbfabrikat ist und eine Markierung (38, 38') eine optische Mitte des Brillenglases, des Brillenglas-Rohlings oder des Brillenglas-Halbfabrikats anzeigt und/oder eine Zylinderachse des Brillenglases, des Brillenglas-Rohlings oder des Brillenglas-Halbfabrikats anzeigt und/oder ein Brillenglas-Koordinatensystem anzeigt und/oder einen Nahbezugspunkt und/oder einen Fernbezugspunkt anzeigt.

10. Verfahren nach einem der Ansprüche 1 bis 9, **dadurch gekennzeichnet, dass** das Koordinatensystem (32) der Anzeigefläche (22) zu dem Koordinatensystem (28) des Körpers (16) anhand der Projektion wenigstens eines Abschnitts eines Rands der Oberfläche (14) des Körpers (16) auf die Anzeigefläche (22) referenziert wird.

11. Computerprogrammprodukt mit einem Computerprogramm mit Programmcode zur Durchführung aller Verfahrensschritte, die in einem der Ansprüche 1 bis 10 angegeben sind, wenn das Computerprogramm in eine Recheneinrichtung (24) geladen und/oder in einer Recheneinrichtung (24) durchgeführt wird.

12. System zum Anzeichnen einer aus einer ortsabhängigen Information zu einem Körper (16) gewonnenen Anzeigeinformation auf einer Oberfläche (14) des Körpers (16),
**gekennzeichnet durch**
eine Recheneinrichtung (24), die für eine Vielzahl von Orten auf oder in dem Körper (16) ermittelte ortsabhängige Information in eine Anzeigeinformation überführt, die wenigstens eine zu einem körperfesten Koordinatensystem (28) des Körpers (16) referenzierte dreidimensionale Lageinformation eines auf dem Körper (16) oder in dem Körper (16) liegenden Orts enthält; und
eine Anzeigeeinrichtung (20) für das Anzeigen der Anzeigeinformation zum Zwecke des Visualisierens auf der Oberfläche (14) des Körpers (16) an einem auf einer Anzeigefläche (22) liegenden, durch eine Projektion des zu der dreidimensionalen Lageinformation gehörenden, auf dem Körper (16) oder in dem Körper (16) liegenden Orts definierten Projektionsort in einem zu dem Koordinatensystem (28) des Körpers (16) referenzierten Koordinatensystem (32) der Anzeigefläche (22).

13. System nach Anspruch 12, **gekennzeichnet durch** eine Markierungseinrichtung (36) für das Aufbringen einer Markierung (38, 38') auf oder in dem Körper (16) zum Zwecke des Anzeichnens der Anzeigeinformation an dem auf der Oberfläche (14) des Körpers (16) visualisierten Projektionsort.

14. System nach Anspruch 12 oder Anspruch 13, **gekennzeichnet durch** wenigstens eine Messvorrichtung für das Ermitteln von ortabhängiger Information zu dem Körper (16) für eine Vielzahl von Punkten auf oder in dem Körper (16) aus der Gruppe Scheitelbrechwert-Messgerät, Deflektometer, OCT-Messgerät, Interferometer, konfokales Mikroskop, Gerät für das Bestimmen der optischen inversen Radon-Transformation, Röntgentomograf, Magnetresonanztomograf, Thermograf, mit IR-Licht arbeitendes Scheitelbrechwert-Messgerät, mit IR-Licht arbeitendes Deflektometer, mit IR-Licht arbeitendes OCT-Messgerät, mit IR-Licht arbeitendes Interferometer, mit IR-Licht arbeitendes konfokales Mikroskop, mit IR-Licht arbeitendes Gerät für das Bestimmen der optischen inversen Radon-Transformation, Ultraschall-Messgerät, Schlierenmessverfahren-Messgerät, das der Recheneinrichtung (24) die zu dem Körper (16) für eine Vielzahl von Punkten auf oder in dem Körper (16) ermittelte ortsabhängige Information zuführt.

15. System nach einem der Ansprüche 12 bis 14, **dadurch gekennzeichnet, dass** die Recheneinrichtung (24) ein Computerprogramm mit Programmcode zur Durchführung aller Verfahrensschritte enthält, die in einem der Ansprüche 1 bis 10 angegeben sind.

Fig.1

Fig.2

Fig.3

Fig.4

Fig.5

Fig.6

Fig.7

Fig.8

Fig.9

Fig.10

Fig.11

Fig.12a

Fig.12b

**Europäisches Patentamt**
**European Patent Office**
**Office européen des brevets**

# EUROPÄISCHER RECHERCHENBERICHT

**Nummer der Anmeldung**

EP 19 20 4919

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2017/261765 A1 (DANGELMAIER ANDREAS [DE] ET AL) 14. September 2017 (2017-09-14) * Absätze [0052] - [0057]; Ansprüche 20-21; Abbildung 7 * ----- | 1-15 | INV. G01M11/02 G01N21/958 G02C7/02 |
| A,D | DE 10 2015 211879 A1 (ZEISS CARL AG [DE]; ZEISS CARL VISION INT GMBH [DE]) 29. Dezember 2016 (2016-12-29) * Zusammenfassung * ----- | 1-15 | |

RECHERCHIERTE SACHGEBIETE (IPC)

G01M
G02C
G01N

Der vorliegende Recherchenbericht wurde für alle Patentansprüche erstellt

| Recherchenort | Abschlußdatum der Recherche | Prüfer |
|---|---|---|
| Den Haag | 25. Mai 2020 | Keita, Mamadou |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 19 20 4919

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-05-2020

| Im Recherchenbericht angeführtes Patentdokument | Datum der Veröffentlichung | Mitglied(er) der Patentfamilie | Datum der Veröffentlichung |
|---|---|---|---|
| US 2017261765 A1 | 14-09-2017 | KEINE | |
| DE 102015211879 A1 | 29-12-2016 | BR 112017027996 A2 | 28-08-2018 |
| | | CA 2989262 A1 | 29-12-2016 |
| | | CN 107810400 A | 16-03-2018 |
| | | DE 102015211879 A1 | 29-12-2016 |
| | | EP 3314230 A1 | 02-05-2018 |
| | | HK 1252453 A1 | 24-05-2019 |
| | | JP 6368872 B1 | 01-08-2018 |
| | | JP 2018524584 A | 30-08-2018 |
| | | KR 20180019123 A | 23-02-2018 |
| | | US 2018120198 A1 | 03-05-2018 |
| | | US 2020088603 A1 | 19-03-2020 |
| | | WO 2016207412 A1 | 29-12-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- DE 102016009810 A1
- DE 102015211879 A1